# EUROPEAN PATENT APPLICATION

(11) **EP 4 697 548 A1**
(43) Date of publication of application: **18.02.2026**
(21) Application number: 24842171.1
(22) Date of filing: 27.06.2024
(51) Int. Cl.: H02J 7/00, H02J 7/02

(54) **ELECTRONIC DEVICE, CHARGING CIRCUIT, CHARGING CONTROL METHOD, AND CHIP**

(30) Priority: 14.07.2023 CN 202310866593
(71) Applicant: Huawei Technologies Co., Ltd., Shenzhen, Guangdong 518129 (CN)
(72) Inventor: ZHOU, Xiaofeng, Shenzhen, Guangdong 518129 (CN); YANG, Chengjun, Shenzhen, Guangdong 518129 (CN)
(74) Representative: Epping - Hermann - Fischer
(86) International application number: PCT/CN2024/102129
(87) International publication number: WO 2025/016175

(57) **Abstract**

An electronic device, a charging circuit, a charging control method, and a chip are provided, which relate to the field of electronic technologies. The charging circuit includes a first voltage conversion circuit and a second voltage conversion circuit. An input end of the first voltage conversion circuit and an input end of the second voltage conversion circuit are coupled to a power supply end Vin; an output end Vbatl of the first voltage conversion circuit is configured to be coupled to a positive electrode of a first battery, a negative electrode of the first battery is coupled to a positive electrode of a second battery, and a negative electrode of the second battery is coupled to a ground; and an output end Vbat2 of the second voltage conversion circuit is configured to be coupled to the positive electrode of the second battery. A first voltage conversion ratio of the first voltage conversion circuit is different from a second voltage conversion ratio of the second voltage conversion circuit, and a working state of the first voltage conversion circuit and a working state of the second voltage conversion circuit overlap in terms of time.

## Description

This application claims priority to Chinese Patent Application No. 202310866593.9, filed with the China National Intellectual Property Administration on July 14, 2023 and entitled "ELECTRONIC DEVICE, CHARGING CIRCUIT, CHARGING CONTROL METHOD, AND CHIP", which is incorporated herein by reference in its entirety.

### TECHNICAL FIELD

Embodiments of this application relate to the field of electronic technologies, and in particular, to an electronic device, a charging circuit, a charging control method, and a chip.

### BACKGROUND

With promotion of product forms of dual-battery or multi-battery electronic devices, dual-battery or multi-battery fast charging becomes increasingly common. Generally, dual-battery or multi-battery serial charging can achieve better charging performance than parallel charging. However, a premise of serial charging is that battery capacities of two batteries or battery capacities of a plurality of batteries need to be close. In some application scenarios, for example, in a foldable device scenario, battery capacities of a main board and a sub-board are different, or even are greatly different. In addition, when an electronic device is used for long time, attenuation of a battery life is inconsistent, and power consumption of each foldable part is different. This causes a situation in which the battery capacities of the main board and the sub-board are inconsistent. In this way, in a charging process, a charging speed is limited by a charging speed of a small-capacity battery in a plurality of batteries, which affects an overall charging speed and charging duration of the electronic device.

### SUMMARY

Embodiments of this application provide an electronic device, a charging circuit, a charging control method, and a chip, to implement fast charging of a dual-battery or multi-battery electronic device.

According to a first aspect, a charging circuit is provided. The charging circuit is used in an electronic device, and is configured to charge a first battery and a second battery of the electronic device. The charging circuit includes a first voltage conversion circuit and a second voltage conversion circuit. In a structure, an input end of the first voltage conversion circuit and an input end of the second voltage conversion circuit are coupled to a power supply end Vin; an output end Vbat1 of the first voltage conversion circuit is configured to be coupled to a positive electrode of the first battery, a negative electrode of the first battery is coupled to a positive electrode of the second battery, and a negative electrode of the second battery is coupled to a ground; and an output end Vbat2 of the second voltage conversion circuit is configured to be coupled to the positive electrode of the second battery. A first voltage conversion ratio of the first voltage conversion circuit is different from a second voltage conversion ratio of the second voltage conversion circuit, the first voltage conversion circuit is configured to output a first current to the first battery and the second battery in a working state, the second voltage conversion circuit is configured to output a second current to the second battery in a working state, and the working state of the first voltage conversion circuit and the working state of the second voltage conversion circuit overlap in terms of time. In this way, when battery capacities of two batteries of an electronic device or battery capacities of a plurality of batteries of an electronic device are different, the first battery and the second battery may be separately charged by the first voltage conversion circuit by using the first current, and the second battery may be charged by the second voltage conversion circuit by using the second current simultaneously. In this case, a charging current of the first battery is the first current, and a charging current of the second rechargeable battery is a sum of the first current and the second current. In this way, the first battery and the second battery are charged simultaneously, and the first battery and the second battery can be separately charged by using different currents, so that impact on a charging speed and charging duration caused by inconsistent battery capacities in a dual-battery or multi-battery scenario is reduced, and fast charging of the dual-battery or multi-battery electronic device is implemented.

In a possible implementation, the first voltage conversion ratio is less than the second voltage conversion ratio. Generally, because a series voltage of the first battery and the second battery is higher than a voltage of the second battery, and both the input end of the first voltage conversion circuit and the input end of the second voltage conversion circuit are coupled to the same power supply end Vin, the first voltage conversion ratio needs to be less than the second voltage conversion ratio to provide, to the positive electrode of the first battery, a voltage higher than the positive electrode of the second battery.

In a possible implementation, the electronic device further includes a third battery, where the third battery is connected in parallel to the second battery, or the third battery is connected in series between the negative electrode of the second battery and the ground. In some examples, when more batteries are provided, whether the batteries are connected in series or in parallel to the second battery is not limited.

In a possible implementation, the first voltage conversion circuit includes any one of the following: a direct charging circuit, and a switched capacitor circuit.

In a possible implementation, the second voltage conversion circuit includes any one of the following: a switched capacitor circuit, and a buck circuit. Generally, compared with the buck circuit BUCK, the switched capacitor circuit SC has higher efficiency. Therefore, the voltage conversion circuit provided in embodiments of this application is preferably an SC circuit.

In a possible implementation, the first voltage conversion ratio includes 2:2, and the second voltage conversion ratio includes 2:1; or the first voltage conversion ratio includes 4:2, and the second voltage conversion ratio includes 4:1.

In a possible implementation, a fail-safe circuit is further included, where the fail-safe circuit is coupled to the power supply end, and the fail-safe circuit is further coupled to the input end of the first voltage conversion circuit and the input end of the second voltage conversion circuit. In a working state, the fail-safe circuit may be equivalent to a diode connected in series to the power supply end. In this way, based on a function of current forward conduction of the diode, a current of the battery may be prevented from flowing back to the power supply end through the charging circuit.

According to a second aspect, a charging control method is provided, and is applied to an electronic device. The electronic device includes a charging circuit, a first battery, and a second battery; the charging circuit includes a first voltage conversion circuit and a second voltage conversion circuit; an input end of the first voltage conversion circuit and an input end of the second voltage conversion circuit are coupled to a power supply end; an output end of the first voltage conversion circuit is configured to be coupled to a positive electrode of the first battery, a negative electrode of the first battery is coupled to a positive electrode of the second battery, and a negative electrode of the second battery is coupled to a ground; and an output end of the second voltage conversion circuit is configured to be coupled to the positive electrode of the second battery.

The charging control method includes: obtaining an electrical parameter of the first battery and an electrical parameter of the second battery, where the electrical parameter may generally include a voltage, a current, a capacity, a temperature, and the like of the battery; outputting a first control parameter to the first voltage conversion circuit based on the electrical parameter of the first battery and the electrical parameter of the second battery; outputting a second control parameter to the second voltage conversion circuit based on the electrical parameter of the first battery and the electrical parameter of the second battery; outputting, by the first voltage conversion circuit, a first current to the first battery and the second battery; and outputting, by the second voltage conversion circuit, a second current to the second battery, where a first voltage conversion ratio of the first voltage conversion circuit is different from a second voltage conversion ratio of the second voltage conversion circuit, and a working state of the first voltage conversion circuit and a working state of the second voltage conversion circuit overlap in terms of time.

In a possible implementation, the method further includes: when it is determined, based on the electrical parameter of the first battery and the electrical parameter of the second battery, that a voltage of the first battery and a voltage of the second battery do not change synchronously, updating the first control parameter and/or the second control parameter.

In a possible implementation, updating the first control parameter specifically includes: updating the first control parameter when it is determined that a change slope of the voltage of the first battery is greater than a change slope of the voltage of the second battery, where an updated first control parameter is used to control the first voltage conversion circuit to increase an equivalent impedance.

In a possible implementation, updating the second control parameter specifically includes: updating the second control parameter when it is determined that a change slope of the voltage of the first battery is greater than a change slope of the voltage of the second battery, where an updated second control parameter is used to control the second voltage conversion circuit to reduce an equivalent impedance.

In a possible implementation, updating the first control parameter specifically includes: updating the first control parameter when it is determined that a change slope of the voltage of the first battery is less than a change slope of the voltage of the second battery, where an updated first control parameter is used to control the first voltage conversion circuit to reduce an equivalent impedance.

In a possible implementation, updating the first control parameter specifically includes: updating the second control parameter when it is determined that a change slope of the voltage of the first battery is less than a change slope of the voltage of the second battery where an updated second control parameter is used to control the second voltage conversion circuit to increase an equivalent impedance.

In a possible implementation, the method further includes: determining a third control parameter based on the electrical parameter of the first battery and the electrical parameter of the second battery, and outputting the third control parameter to a charger, where the third control parameter is used to control an electrical parameter output by the charger.

In a possible implementation, the method further includes: generating a fourth control parameter when it is determined that the electrical parameter of the first battery exceeds a first parameter threshold and/or the electrical parameter of the second battery exceeds a second parameter threshold; and outputting the fourth control parameter to the charger, where the fourth control parameter is used to control the charger to reduce the electrical parameter output by the charger. According to a third aspect, a charging control apparatus is provided, and is used in an electronic device. The electronic device includes a charging circuit, a first battery, and a second battery; the charging circuit includes a first voltage conversion circuit and a second voltage conversion circuit; an input end of the first voltage conversion circuit and an input end of the second voltage conversion circuit are coupled to a power supply end; an output end of the first voltage conversion circuit is configured to be coupled to a positive electrode of the first battery, a negative electrode of the first battery is coupled to a positive electrode of the second battery, and a negative electrode of the second battery is coupled to a ground; and an output end of the second voltage conversion circuit is configured to be coupled to the positive electrode of the second battery. The charging control apparatus includes: a detection circuit, configured to obtain an electrical parameter of the first battery and an electrical parameter of the second battery; and a processing circuit, configured to: output a first control parameter to the first voltage conversion circuit based on the electrical parameter of the first battery and the electrical parameter of the second battery; and output a second control parameter to the second voltage conversion circuit based on the electrical parameter of the first battery and the electrical parameter of the second battery, where a first voltage conversion ratio of the first voltage conversion circuit is different from a second voltage conversion ratio of the second voltage conversion circuit. The first voltage conversion circuit is configured to output a first current to the first battery and the second battery in a working state under the control of the first control parameter. The second voltage conversion circuit is configured to output a second current to the second battery in a working state under the control of the second control parameter.

The working state of the first voltage conversion circuit and the working state of the second voltage conversion circuit overlap in terms of time.

According to a fourth aspect, a chip is provided, including a substrate and the charging circuit according to the first aspect and the possible implementations of the first aspect that is fabricated on the substrate.

According to a fifth aspect, a charging control apparatus is provided, used in an electronic device, where the electronic device is configured to connect to a charger to form a charging system, and the charger is configured to charge a battery of the electronic device. The charging control apparatus includes a processor and a memory coupled to the processor. The memory stores program code, and the processor is configured to execute the program code in the memory to perform the charging control method according to the second aspect and the possible implementations of the second aspect.

According to a sixth aspect, an electronic device is provided, including the charging circuit according to the first aspect and the possible implementations of the first aspect, and a first battery and a second battery that are connected to the charging circuit.

According to a seventh aspect, an electronic device is provided, including the charging control apparatus according to the third aspect or the fifth aspect and the possible implementations of the third aspect or the fifth aspect, and a first battery and a second battery that are connected to the charging control apparatus.

For technical problems resolved in the second aspect to the seventh aspect and the possible implementations of the second aspect to the seventh aspect and implemented technical effects thereof, refer to the descriptions in the first aspect and the possible implementations of the first aspect. Details are not described again.

### BRIEF DESCRIPTION OF DRAWINGS

FIG. 1 is a diagram of a structure of a charging system according to an embodiment of this application;
FIG. 2 is a diagram of a structure of an electronic device according to an embodiment of this application;
FIG. 3 is a diagram of a structure of an electronic device according to another embodiment of this application;
FIG. 4 is a diagram of a structure of a USB interface according to an embodiment of this application;
FIG. 5 is a diagram of a structure of an electronic device according to still another embodiment of this application;
FIG. 6 is a diagram of a structure of an electronic device according to yet another embodiment of this application;
FIG. 7 is a diagram of a structure of an electronic device according to still yet another embodiment of this application;
FIG. 8 is a diagram of a structure of an electronic device according to a further embodiment of this application;
FIG. 9A is a diagram of a structure of an electronic device according to a still further embodiment of this application;
FIG. 9B is a diagram of a structure of an electronic device according to a yet further embodiment of this application;
FIG. 10A is a diagram of a structure of a charging circuit according to an embodiment of this application;
FIG. 10B is a diagram of a structure of a charging circuit according to another embodiment of this application;
FIG. 10C is a diagram of a structure of a charging circuit according to still another embodiment of this application;
FIG. 10D is a diagram of a structure of a charging circuit according to yet another embodiment of this application;
FIG. 11 is a diagram of a structure of a charging circuit according to still yet another embodiment of this application;
FIG. 12 is a diagram of a structure of a charging circuit according to a further embodiment of this application;
FIG. 13 is a schematic flowchart of a charging control method according to an embodiment of this application; and
FIG. 14 is a diagram of a structure of a charging control apparatus according to an embodiment of this application.

### DESCRIPTION OF EMBODIMENTS

Unless otherwise required in the context, throughout this specification and claims, the term "include (comprise)" and other forms of the term, for example, a third person singular form "includes (comprises)" and a present participle form "including (comprising)", are interpreted as "open and inclusive", namely, "include but not limited to". In descriptions of the specification, the terms such as "one embodiment (one embodiment)", "some embodiments (some embodiments)", "an example embodiment (exemplary embodiments)", "an example (example)", "a specific example (specific example)", or "some examples (some examples)" are intended to indicate that a specific feature, structure, material, or characteristic related to the embodiment or example is included in at least one embodiment or example of this application. The foregoing schematic representations of the terms do not necessarily refer to a same embodiment or example. Further, the particular feature, structure, material, or characteristic may be included in any one or more embodiments or examples in any appropriate manner.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

When being used to describe a three-port switch (which is also referred to as a switching device, for example, a switch transistor or a switching transistor), a "first end" and a "second end" may be connection ends of the switch, and a "control end" may be a control end of the switch. For example, for a MOS (metal-oxide-semiconductor, metal-oxide-semiconductor) transistor, the control terminal may be a gate (gate) of the MOS transistor, the first terminal may be a source (source) of the MOS transistor, and the second terminal may be a drain (drain) of the MOS transistor; or the first terminal may be a drain of the MOS transistor, and the second terminal may be a source of the MOS transistor. In embodiments of this application, each switch may include one switch transistor. However, to reduce, as much as possible, an internal resistance increase caused by a switch connected in series to a line, each switch may also include two or more switch transistors connected in parallel.

The following describes technical solutions of this application with reference to accompanying drawings.

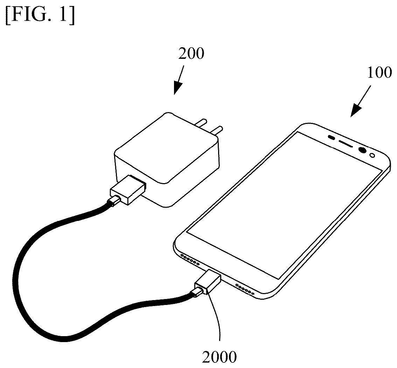

With reference to FIG. 1, an embodiment of this application provides a charging system including an electronic device 100 and a charger 200. Generally, the charger 200 includes a housing and a power conversion circuit installed in the housing. An input side of the power conversion circuit is usually connected to a mains (for example, may be a 220 V alternating current mains) through pins disposed on the housing, and an output side of the power conversion circuit is connected to the electronic device 100 through a plug 2000. In addition, the power conversion circuit may be usually soldered to a printed circuit board PCB in the housing.

The charging circuit provided in this embodiment of this application may be used in an electronic device in which a battery needs to be charged, like a mobile phone, a tablet computer, a notebook computer, an ultra-mobile personal computer (ultra-mobile personal computer, UMPC), a handheld computer, a netbook, and a personal data assistant (personal digital assistant, PDA), a wearable electronic device, or a virtual reality device. This is not limited in embodiments of this application.

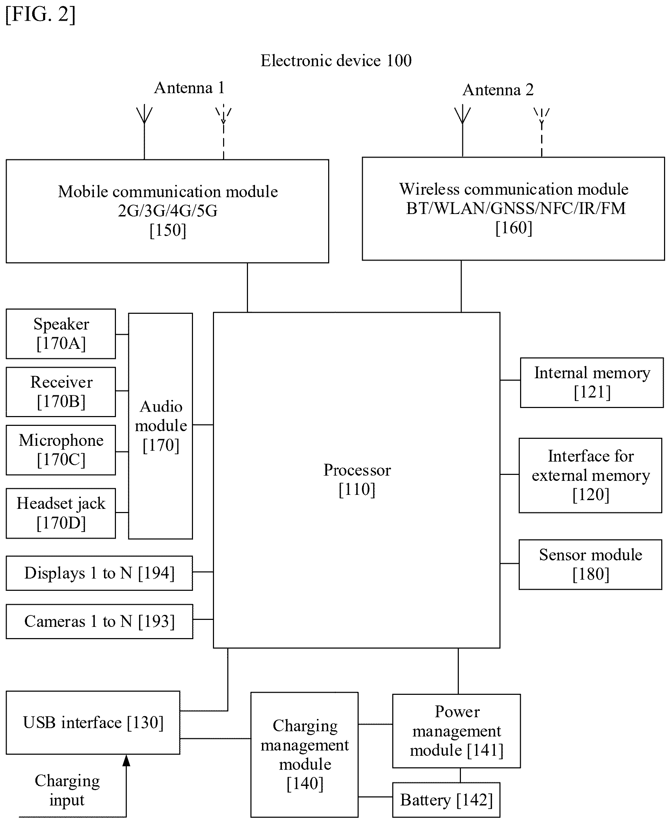

For example, FIG. 2 is a diagram of a structure of an electronic device 100.

The electronic device 100 may include a processor 110, an interface for external memory 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a camera 193, a display 194, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by using hardware, software, or a group of software and hardware.

The processor 110 may include one or more processing units. For example, the processor 110 may include an application processor (application processor, AP), a modem processor, a graphics processing unit (graphics processing unit, GPU), a microcontroller unit (microcontroller unit, MCU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The charging management module 140 is configured to receive a charging input from a charger. The charger may be a wireless charger or a wired charger (or an adapter). In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to a load circuit of the electronic device through the power management module 141 while charging the battery 142. Specifically, with reference to FIG. 2, the charging management module 140 is connected to the USB interface 130.

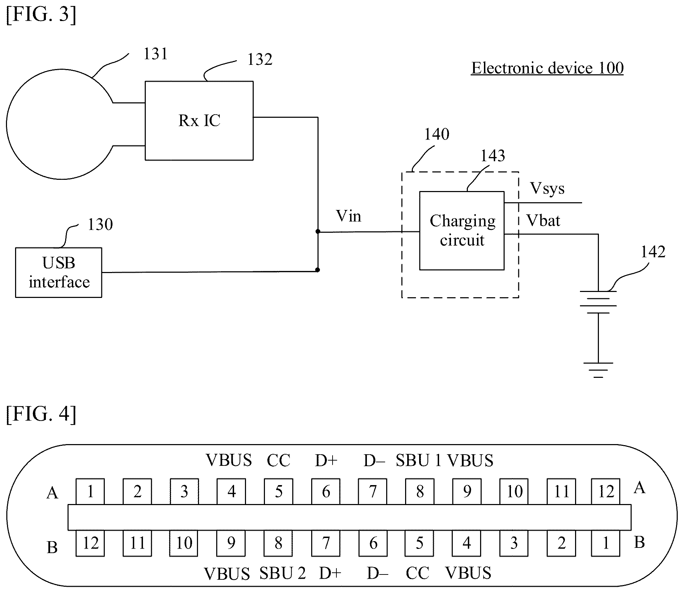

To implement normal charging or fast charging of the battery, with reference to FIG. 3, the charging management module 140 may include a charging circuit 143 configured to charge the battery, where a power supply end Vin of the charging circuit 143 is connected to the USB interface 130, and a charging end Vbat of the charging circuit 143 is connected to the battery 142. For another example, in some wireless charging embodiments, with reference to FIG. 2, the power supply end Vin of the charging circuit 143 is specifically connected to the wireless charging coil 131 through a receiver circuit (receive integrated circuit, Rx IC) 132. The processor 110 or the charging management module 140 may control, according to a charging protocol, the charging circuit 143 to convert a voltage of the power supply end Vin into a voltage Vbat near a battery voltage (generally 5 V), and then charge the battery 142. As shown in FIG. 3, the charging circuit 143 further includes a system voltage end Vsys, configured to provide a voltage for the load circuit Rload.

It should be noted that, to enable the electronic device to be usually coupled to an external device (for example, a device like the charger, an analog headset, a digital headset, a mobile storage device, or a mobile terminal) through the USB interface 130. The USB interface 130 may be a Type-C interface. As shown in FIG. 4, each of a side A and a side B of the Type-C interface includes two VBUS pins (used to provide a USB voltage, a pin 4 and a pin 9), a CC pin (a pin 5), a D+ pin (a pin 6 on the side A and a pin 7 on the side B), a D- pin (a pin 7 on the side A and a pin 6 on the side B), and an SBU pin (a pin 8 is a spare pin, marked as SBU 1 on the side A and SBU 2 on the side B), where the pins are symmetrically disposed on the two sides. Generally, the power supply end Vin of the charging circuit 143 is coupled to the VBUS pin. When being connected to an external charger through the USB interface 130, the electronic device may negotiate a charging voltage with the charger based on pins such as the CC pin, the D+ pin, and the D- pin according to the charging protocol. For example, for a charger that supports a power deliver (power deliver, PD) charging protocol, a charging parameter is negotiated based on the CC pin; for a charger that supports a supercharger protocol (supercharger protocol, SCP), a charging parameter is negotiated based on the D+ pin and the D- pin; and certainly, for an electronic device that supports wireless charging, a charging parameter may also be negotiated with the charger based on the Rx IC 132 and the wireless charging coil 131 according to the charging protocol. Specifically, in this embodiment of this application, the third control parameter, the fourth control parameter, and the like that are used to control the charger may be transmitted.

The power management module 141 is configured to connect to the battery 142, the charging management module 140, and the processor 110. The power management module 141 receives inputs from the battery 142 and/or the charging management module 140, and supplies power to load circuits Rload such as the processor 110, the internal memory 121, the display 194, the camera 193, the wireless communication module 160, and the like. In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like. The antenna 1 and the antenna 2 are configured to transmit and receive electromagnetic wave signals. The mobile communication module 150 may provide a wireless communication solution that is applied to the electronic device 100 and that includes a 2G/3G/4G/5G or the like. In some embodiments, at least some functional modules in the mobile communication module 150 may be disposed in the processor 110. In some embodiments, at least some functional modules of the mobile communication module 150 may be disposed in a same device as at least some modules of the processor 110. The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The display 194 is configured to display an image, a video, and the like.

The electronic device 100 may implement a photographing function through the ISP, the camera 193, the video codec, the GPU, the display 194, the application processor, and the like.

The camera 193 is configured to capture a static image or a video.

The interface for external memory 120 may be used to connect to an external memory card, for example, a micro SD card, to extend a storage capability of the electronic device 100. The external memory card communicates with the processor 110 through the interface for external memory 120, to implement a data storage function. For example, files such as music and videos are stored in the external storage card.

The internal memory 121 may be configured to store one or more computer programs. The one or more computer programs include instructions. The processor 110 may run the instructions stored in the internal memory 121, so that the electronic device 100 performs a method provided in some embodiments of this application, various functional applications, data processing, and the like. The electronic device 100 may implement an audio function such as music playing or recording through the audio module 170, the speaker 170A, the receiver 170B, the microphone 170C, the headset jack 170D, the application processor, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a touch sensor, an ambient light sensor, a bone conduction sensor, and the like. In addition, the method may further include a Coulomb meter, a galvanometer, a voltmeter, a temperature sensor, and the like that are used to detect an electrical parameter of a battery in this embodiment of this application.

In addition, the electronic device may further include one or more components such as a button 190, a motor 191, an indicator 192, and a subscriber identification module (subscriber identification module, SIM) card interface 195. This is not limited in this embodiment of this application.

Generally, the charging circuit 143 shown in FIG. 3 includes a direct charging circuit, a buck circuit BUCK, a switched capacitor circuit (switched capacitor circuit, SC), and the like. It should be noted that embodiments of this application may be applied to a dual-battery or multi-battery electronic device, like a foldable mobile phone, smart glasses, or a wireless headset. It may be understood that in the dual-battery or multi-battery electronic device, batteries for supplying power to different parts of the electronic device are disposed in the parts in a distributed manner. For example, in a foldable mobile phone, one battery may be disposed in each foldable part.

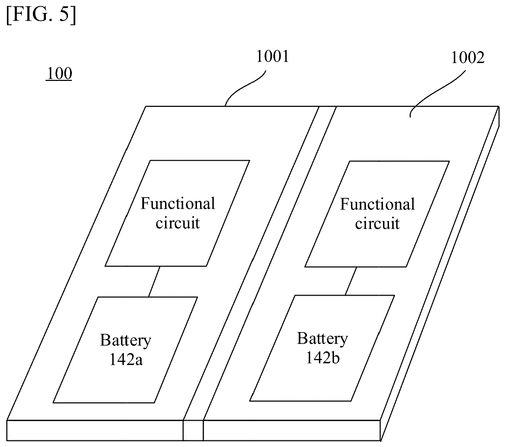

With reference to FIG. 5, the electronic device 100 provided may be a foldable mobile phone. The foldable mobile phone includes two foldable parts (a foldable part 1001 and a foldable part 1002), where the foldable parts are mechanically connected in a manner similar to a hinge, and the two foldable parts connected through the hinge each are provided with a battery and a functional circuit connected to the battery, to implement basic functions of the mobile phone. Specifically, as shown in FIG. 5, the foldable part 1001 on the left side includes a battery 142a and a functional circuit. The foldable part 1002 on the right side includes a battery 142b and a functional circuit. The functional circuit may include one or more of a processor 110, an interface for external memory 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a camera 193, a display 194, and the like.

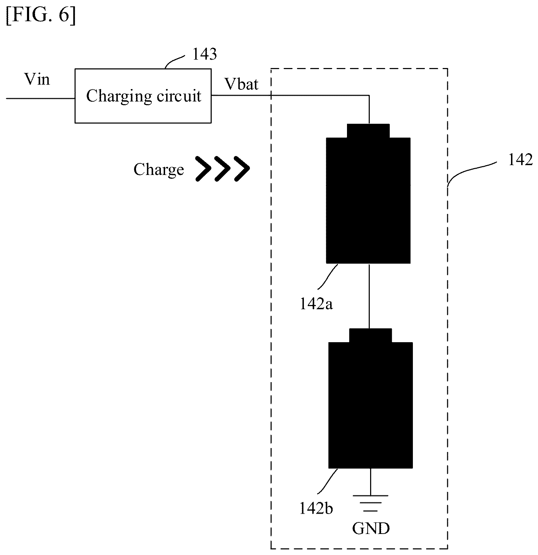

When a dual-battery or multi-battery electronic device is charged, compared with parallel charging, dual-battery or multi-battery serial charging can achieve better charging performance by avoiding an excessively large charging current. With reference to FIG. 6, a battery pack formed by connecting the battery 142a and the battery 142b in series may be usually connected between the charging end Vbat and the ground GND of the charging circuit 143 for serial charging. However, during serial charging, the charging circuit provides a unified charging current I for the first battery and the second battery through the charging end Vbat. Therefore, a prerequisite for serial charging is that battery capacities of two batteries or battery capacities of a plurality of batteries need to be close. In some application scenarios, for example, in a foldable device scenario, battery capacities of a main board and a sub-board are different, or even are greatly different. In addition, when an electronic device is used for long time, attenuation of a battery life is inconsistent, and power consumption of each foldable part is different. This causes a situation in which the battery capacities of the main board and the sub-board are inconsistent. In this way, in a charging process, a charging speed is limited by a charging speed of a small-capacity battery in a plurality of batteries, which affects an overall charging speed and charging duration of the electronic device.

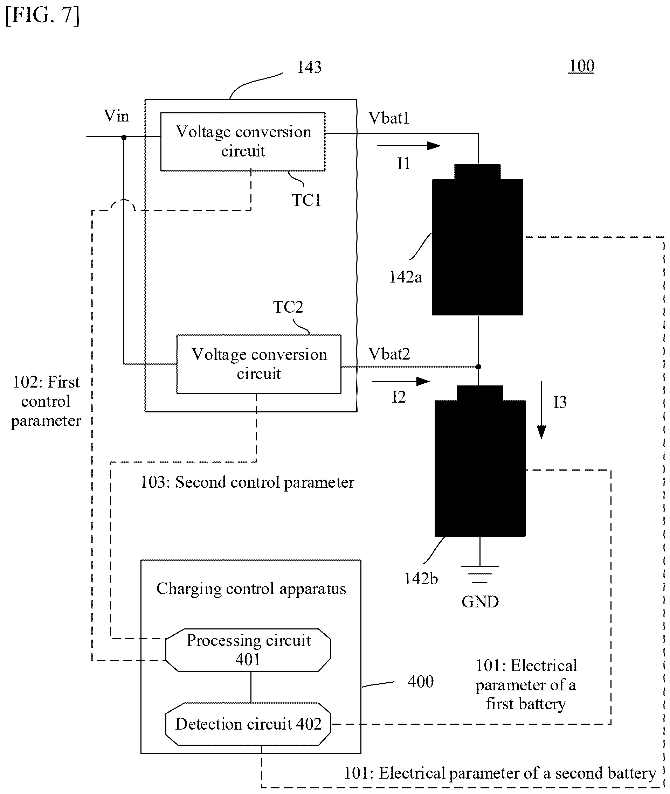

To implement fast charging of a dual-battery or multi-battery electronic device, an embodiment of this application provides a charging circuit 143. With reference to FIG. 7, the charging circuit 143 is used in an electronic device 100, and is configured to charge a first battery 142a and a second battery 142b of the electronic device 100.

In a structure, the charging circuit 143 includes a voltage conversion circuit TC1 and a voltage conversion circuit TC2. An input end of the voltage conversion circuit TC1 and an input end of the voltage conversion circuit TC2 are coupled to a power supply end Vin. An output end Vbat1 of the voltage conversion circuit TC1 is configured to be coupled to a positive electrode of the first battery 142a, a negative electrode of the first battery 142a is coupled to a positive electrode of the second battery, and a negative electrode of the second battery 142b is coupled to the ground GND. An output end Vbat2 of the voltage conversion circuit TC2 is configured to be coupled to the positive electrode of the second battery 142b.

A first voltage conversion ratio of the voltage conversion circuit TC1 is different from a second voltage conversion ratio of the voltage conversion circuit TC2, the voltage conversion circuit TC1 is configured to output a first current I1 to the first battery 142a and the second battery 142b in a working state, the voltage conversion circuit TC2 is configured to output a second current I2 to the second battery 142b in a working state, and the working state of the voltage conversion circuit TC1 and the working state of the voltage conversion circuit TC2 overlap in terms of time.

Based on the charging circuit 143, an embodiment of this application further provides a charging control method, applied to A charging control apparatus 400 shown in FIG. 7. With reference to FIG. 7, the charging control method includes the following steps.

101: The charging control apparatus 400 obtains an electrical parameter of a first battery and an electrical parameter of a second battery.

Specifically, the charging control apparatus 400 shown in FIG. 7 includes a detection circuit 402. The detection circuit 402 may include one or more detection sub-circuits, and each detection sub-circuit is correspondingly configured to detect one electrical parameter of a battery. For example, the detection sub-circuit may include one or more of sensors like a Coulomb meter, a galvanometer, a voltmeter, a temperature sensor. The detection sub-circuit may detect and obtain one or more of the following electrical parameters of the battery: a state of charge, a current, a voltage, and a temperature. In some examples, the detection circuit 402 may be implemented by one or more sensors in the sensor module 180 in FIG. 2.

102: The charging control apparatus 400 outputs a first control parameter to the first voltage conversion circuit TC1 based on the electrical parameter of the first battery and the electrical parameter of the second battery.

103. The charging control apparatus outputs a second control parameter to the second voltage conversion circuit TC2 based on the electrical parameter of the first battery and the electrical parameter of the second battery.

Specifically, the charging control apparatus 400 shown in FIG. 7 includes a processing circuit 401. The processing circuit 401 may output the first control parameter to the voltage conversion circuit TC1 based on the electrical parameter of the first battery and the electrical parameter of the second battery, and output the second control parameter to the voltage conversion circuit TC2. In some examples, the processing circuit 401 may be implemented by the AP in the processor 110 in FIG. 2. A first voltage conversion ratio of the voltage conversion circuit TC1 is different from a second voltage conversion ratio of the voltage conversion circuit TC2, the voltage conversion circuit TC1 is configured to output a first current I1 to the first battery and the second battery in a working state under the control of the first control parameter, the voltage conversion circuit TC2 is configured to output a second current I2 to the second battery in a working state under the control of the second control parameter (in this way, a third current I3 flowing through the second battery=I1+I2), and the working state of the voltage conversion circuit TC1 and the working state of the voltage conversion circuit TC2 overlap in terms of time.

It should be noted that, because the third current I3 is greater than the first current I1, a capacity of the second battery 142b is usually greater than that of the first battery 142a. Generally, in a charging state, the first battery 142a and the second battery 142b may be connected in series through a switch circuit, the second battery 142b with a larger capacity is connected to the ground GND, and the first battery 142a with a smaller capacity is connected to the voltage conversion circuit TC1. In addition, in a power supply state, the first battery 142a and the second battery 142b may be separately connected to corresponding functional circuits through a switch circuit. In addition, the first voltage conversion ratio is less than the second voltage conversion ratio. Generally, because a series voltage of the first battery 142a and the second battery 142b is higher than a voltage of the second battery 142b, and both the input end of the voltage conversion circuit TC1 and the input end of the voltage conversion circuit TC2 are coupled to the same power supply end Vin, the first voltage conversion ratio needs to be less than the second voltage conversion ratio to provide, to the positive electrode of the first battery 142a, a voltage higher than the positive electrode of the second battery 142b. In some examples, the first voltage conversion ratio includes 2:2, and the second voltage conversion ratio includes 2:1; or the first voltage conversion ratio includes 4:2, and the second voltage conversion ratio includes 4:1.

In this way, when battery capacities of two batteries of an electronic device or battery capacities of a plurality of batteries of an electronic device are different, the first battery 142a and the second battery 142b may be separately charged by the voltage conversion circuit TC1 by using the first current I1, and the second battery 142b may be charged by the voltage conversion circuit TC2 by using the second current I2 simultaneously. In this case, a charging current of the first battery is the first current I1, and a charging current of the second rechargeable battery is a sum of the first current I1 and the second current I2. In this way, the first battery 142a and the second battery 142b are charged simultaneously, and the first battery 142a and the second battery 142b can be separately charged by using different currents, so that impact on a charging speed and charging duration caused by inconsistent battery capacities in a dual-battery or multi-battery scenario is reduced, and fast charging of the dual-battery or multi-battery electronic device is implemented.

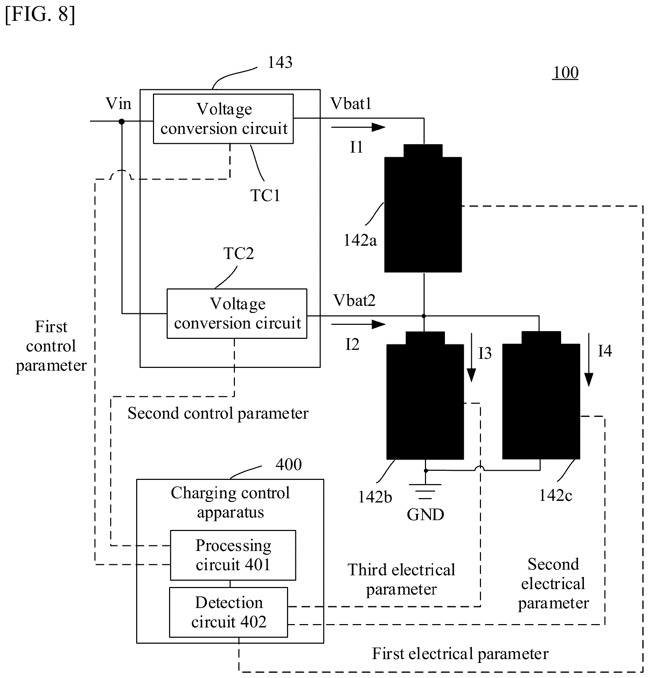

In another example, as shown in FIG. 8, the electronic device 100 further includes a third battery 142c, and the third battery 142c is connected in parallel to the second battery 142b. A difference between FIG. 8 and FIG. 7 lies in that the electronic device 100 in FIG. 8 includes three batteries: the first battery 142a, the second battery 142b, and the third battery 142c. The third battery 142c and the second battery 142b connected in parallel are equivalent to the second battery 142b in FIG. 7. The voltage conversion circuit TC1 is configured to output a first current I1 in a working state, and the voltage conversion circuit TC2 outputs a second current I2 in a working state. Because the first battery 142a is connected in series to Vbat1, a charging current of the first battery 142a is the first current I1. The third battery 142c and the second battery 142b are connected in parallel and then connected in series to Vbat2. Therefore, a third current I3 flowing through the second battery 142b and a fourth current I4 flowing through the third battery 142c satisfy: I3+I4=I1+I2, where currents of the third current I3 and the fourth current I4 are inversely proportional to internal resistances of the second battery 142b and the third battery 142c. In this case, in step 101, the charging control apparatus 400 further needs to obtain an electrical parameter of the third battery 142c. Then, the charging control apparatus 400 generates the first control parameter and the second control parameter based on the electrical parameter of the first battery, the electrical parameter of the second battery, and the electrical parameter of the third battery.

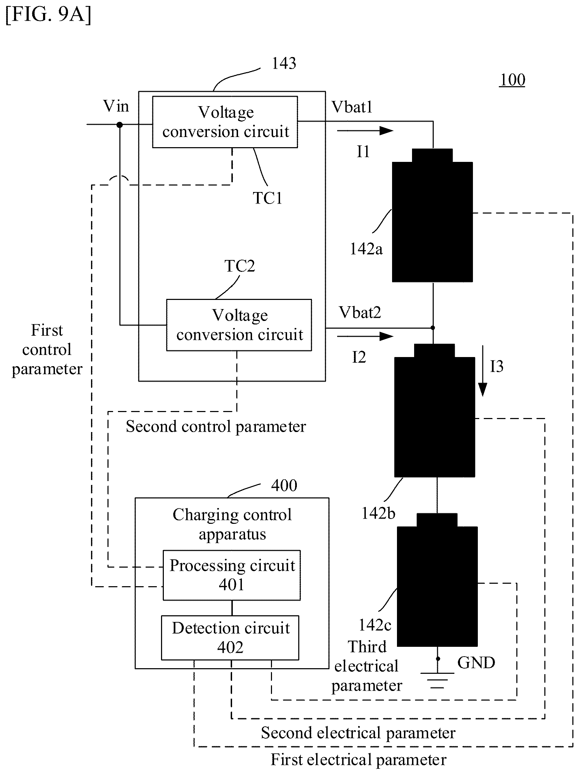

Alternatively, as shown in FIG. 9A, the third battery 142c is connected in series between the negative electrode of the second battery 142b and the ground GND. A difference between FIG. 9A and FIG. 7 lies in that the electronic device 100 in FIG. 9A includes three batteries: the first battery 142a, the second battery 142b, and the third battery 142c. The third battery 142c and the second battery 142b connected in series are equivalent to the second battery 142b in FIG. 7. The voltage conversion circuit TC1 is configured to output a first current I1 in a working state, and the voltage conversion circuit TC2 outputs a second current I2 in a working state. Because the first battery 142a is connected in series to Vbat1, a charging current of the first battery 142a is the first current I1. The third battery 142c and the second battery 142b are connected in series and then connected in series to Vbat2. Therefore, the third current I3 flowing through the second battery 142b is equal to a current flowing through the third battery 142c, and the third current I3 satisfies: I3=I1+I2. In this case, in step 101, the charging control apparatus 400 further needs to obtain an electrical parameter of the third battery. Then, the charging control apparatus 400 generates the first control parameter and the second control parameter based on the electrical parameter of the first battery, the electrical parameter of the second battery, and the electrical parameter of the third battery.

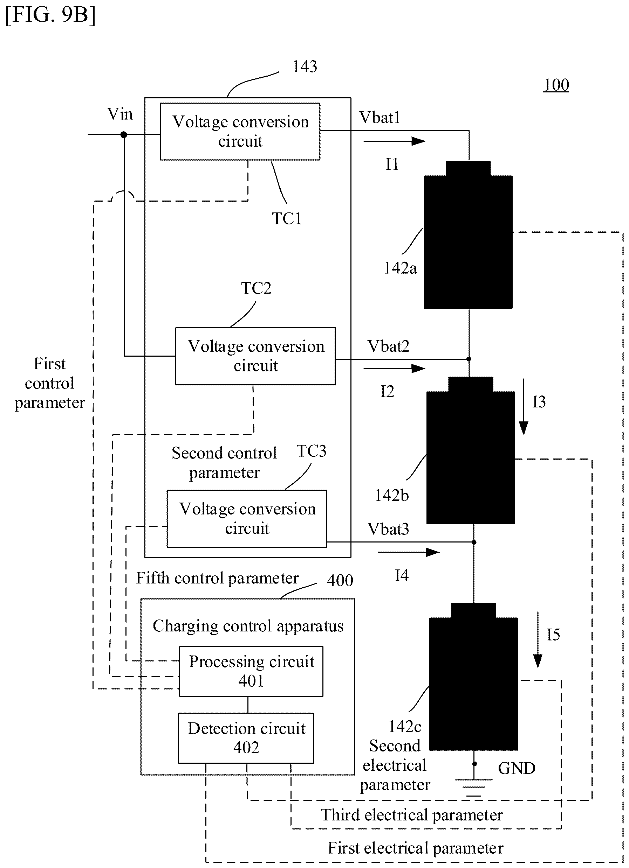

In addition, as shown in FIG. 9B, the third battery 142c is connected in series between the negative electrode of the second battery 142b and the ground GND. A difference between FIG. 9B and FIG. 7 lies in that the electronic device 100 in FIG. 9B includes three batteries: the first battery 142a, the second battery 142b, and the third battery 142c. A difference between FIG. 9B and FIG. 9A lies in that the charging circuit in FIG. 9B further includes a voltage conversion circuit TC3. An input end of the voltage conversion circuit TC3 is coupled to the power supply end Vin, and an output end Vbat3 of the voltage conversion circuit TC3 is configured to be coupled to the positive electrode of the third battery 142c. The voltage conversion circuit TC1 is configured to output a first current I1 in a working state, the voltage conversion circuit TC2 outputs a second current I2 in a working state, and the voltage conversion circuit TC3 outputs a fourth current I4 in a working state. The first battery 142a is connected in series to Vbat1. Therefore, a charging current of the first battery 142a is the first current I1. The second battery 142b is connected in series to Vbat2. Therefore, the third current I3 flowing through the second battery 142b satisfies: I3=I1+I2. The third battery 142c is connected in series to Vbat3. Therefore, a fifth current 15 flowing through the third battery 142c satisfies: I5=I4+I3. In this case, in step 101, the charging control apparatus 400 further needs to obtain an electrical parameter of the third battery. Then, the charging control apparatus 400 generates, based on the electrical parameter of the first battery, the electrical parameter of the second battery, and the electrical parameter of the third battery, the first control parameter, the second control parameter, and a fifth control parameter used to control the voltage conversion circuit TC3.

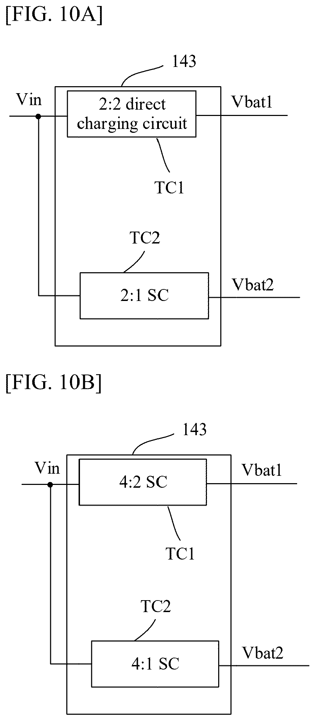

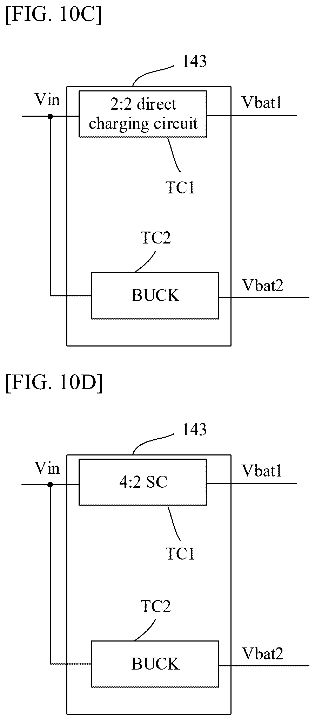

In some examples, in a possible implementation, the voltage conversion circuit TC1 includes any one of the following: a direct charging circuit and a switched capacitor circuit. In a possible implementation, the voltage conversion circuit TC2 includes any one of the following: a switched capacitor circuit and a buck circuit. Generally, compared with the buck circuit BUCK, the switched capacitor circuit SC has higher efficiency. Therefore, the voltage conversion circuit provided in embodiments of this application is preferably an SC circuit. With reference to FIG. 10A to FIG. 10D, four specific structures of the charging circuit 143 applied to FIG. 7 and FIG. 8 are provided. As shown in FIG. 10A, the voltage conversion circuit TC1 may use a direct charging circuit with a voltage conversion ratio of 2:2, and the voltage conversion circuit TC2 may use an SC with a voltage conversion ratio of 2:1. As shown in FIG. 10B, the voltage conversion circuit TC1 may use an SC with a voltage conversion ratio of 4:2, and the voltage conversion circuit TC2 may use an SC with a voltage conversion ratio of 4:1. As shown in FIG. 10C, the voltage conversion circuit TC1 may use a 2:2 direct charging circuit, and the voltage conversion circuit TC2 may use a buck circuit BUCK. As shown in FIG. 10D, the voltage conversion circuit TC1 may use a 4:2 SC, and the voltage conversion circuit TC2 may use a buck circuit BUCK. An equivalent impedance of the voltage conversion circuit TC1 (the voltage conversion circuit TC2) is controlled by using a first control signal (a second control signal), so that the first current I1 output by the voltage conversion circuit TC1 (the second current I2 output by the voltage conversion circuit TC2) can be controlled. The control of the equivalent impedance of the voltage conversion circuit may be specifically control of an impedance or a turn-on duty cycle of the direct charging circuit, or control of a switching frequency of the SC circuit, or control of an output voltage or a current of the BUCK. It may be understood that, when used in the charging circuit 143 shown in FIG. 9A, the voltage conversion circuit TC1 may use a voltage conversion ratio of 3:3, and the voltage conversion circuit TC2 may use a voltage conversion ratio of 3:2. When used in the charging circuit 143 shown in FIG. 9B, the voltage conversion circuit TC1 may use a voltage conversion ratio of 3:3, the voltage conversion circuit TC2 may use a voltage conversion ratio of 3:2, and the voltage conversion circuit TC3 may use a voltage conversion ratio of 3:1.

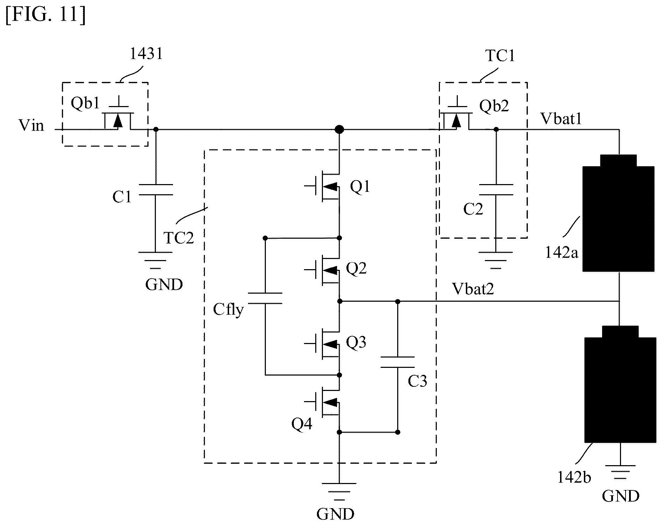

Specifically, with reference to FIG. 11, for example, the voltage conversion circuit TC1 may use a direct charging circuit with a voltage conversion ratio of 2:2, and the voltage conversion circuit TC2 may use an SC with a voltage conversion ratio of 2:1.

With reference to FIG. 11, a TC1 includes a 2:2 direct charging circuit including a switch Qb2 and a capacitor C2. A first end of the switch Qb2 is coupled to a power supply end Vin, and a second end of the switch Qb2 is coupled to an output end Vbat1 of the voltage conversion circuit TC1. A first end of the capacitor C2 is coupled to the output end Vbat1 of the voltage conversion circuit TC1, and a second end of the capacitor C2 is coupled to the ground GND. The 2:2 direct charging circuit may output, to Vbat1, a voltage input by the power supply end Vin, to charge a first battery 142a and a second battery 142b.

With reference to FIG. 11, a TC2 includes a switch circuit including switches Q1 to Q4 and a 2:1 SC including a flying capacitor Cfly and an output capacitor C3. A first end of Q1 is coupled to the power supply end Vin, a second end of Q1 is coupled to a first end of Q2, a second end of Q2 is coupled to a first end of Q3, a second end of the Q3 is coupled to a first end of Q4, and a second end of Q4 is coupled to the ground GND. A first end of the flying capacitor Cfly is coupled to the first end of Q2, a second end of Cfly is coupled to the first end of Q4, a first end of the output capacitor C3 is coupled to the first end of Q3, and a second end of Cout is coupled to the ground GND. The first end of the output capacitor C3 is coupled to an output end Vbat2 of the voltage conversion circuit TC2. The 2:1 SC may convert a voltage input by Vin into a voltage of Vbat2 at a fixed ratio, and charge the second battery 142b.

In addition, FIG. 11 further shows a fail-safe circuit 1431 coupled between the power supply end Vin and the first end of the switch Qb2 (and the first end of the switch Q1). The fail-safe circuit 1431 is coupled to the power supply end Vin, and the fail-safe circuit 1431 is further coupled to an input end (the first end of the switch Qb2) of the voltage conversion circuit TC1 and an input terminal (the first end of the switch Q1) of the voltage conversion circuit TC2. In a working state, the fail-safe circuit 1431 may be equivalent to a diode connected in series to the power supply end Vin. In this way, based on a function of current forward conduction of the diode, a current of the battery may be prevented from flowing back to the power supply end through the charging circuit. For example, in FIG. 11, the fail-safe circuit 1431 includes a switch Qb1, a first end of the switch Qb1 is connected to the power supply end Vin, and a second end of the switch Qb1 is connected to the first end of the switch Qb2 (and the first end of the switch Q1). In addition, a capacitor C1 connected between the switch Qb1 and the ground may be further included.

To control the charging circuit shown in FIG. 11, an embodiment of this application further provides a control time sequence (an on/off state of a switch during time periods T1 and T2) of each switch. Refer to Table 1.

**Table 1**

| Switch | Time T1 | Time T2 | Remarks |
|---|---|---|---|
| Q1 | ON (turned-on) | OFF (turned-off) | Achieve a voltage conversion ratio of 2:1 |
| Q2 | OFF | ON | |
| Q3 | ON | OFF | |
| Q4 | OFF | ON | |
| Qb1 | ON | ON | Prevent a current from flowing back |
| Qb2 | PWM | PWM | Achieve a voltage conversion ratio of 2:2 and control a current by using a PWM signal |

With reference to Table 1, the first control signal may carry a control signal used for Qb2. In two phases T1 and T2 of one working periodicity, the first control signal may be a pulse width modulation (pulse width modulation, PWM) signal. An equivalent impedance of Qb2 may be adjusted by adjusting a turn-on duty cycle of the PWM signal. For example, when the turn-on duty cycle is reduced, the equivalent impedance of Qb2 may be improved, and the first current I1 is reduced. When the turn-on duty cycle is increased, the equivalent impedance of Qb2 may be reduced, and the first current I1 is increased.

The SC circuit shown in FIG. 11 is used as an example. With reference to Table 1, Q1 and Q3 are simultaneously turned on in the phase T1, Q2 and Q4 are simultaneously turned on in the phase T2, and control signals of Q1 and Q3 are complementary to control signals of Q2 and Q4. In the time period T1 of the periodicity, Q1 and Q3 are turned on, and Q2 and Q4 are turned off. In this way, Cfly and C3 are connected in series between Vin and GND, and a voltage input by Vin charges Cfly and C3 simultaneously. In another time period T2 of the periodicity, Q1 and Q3 are turned off, Q2 and Q4 are turned on, Cfly and C3 are connected in parallel, and Cfly discharges to C3, to achieve a voltage conversion ratio of 2:1. Certainly, in FIG. 11, only an SC of 2:1 buck conversion is used as an example. It may be understood that a voltage conversion ratio like 3:1 or 4:1 may alternatively be implemented by using an SC in another form. With reference to Table 1, the second control signal may carry control signals used for Q1 to Q4. Specifically, an equivalent impedance of the SC may be adjusted by controlling switching frequencies of Q1 to Q4. For example, when the switching frequencies of Q1 to Q4 are reduced, a conversion efficiency of the SC is reduced, which is equivalent to that the equivalent impedance of the SC is improved, and the second current I2 is reduced. When the switching frequencies of Q1 to Q4 are increased, a conversion efficiency of the SC is increased, which is equivalent to that the equivalent impedance of the SC is reduced, and the second current I2 is increased.

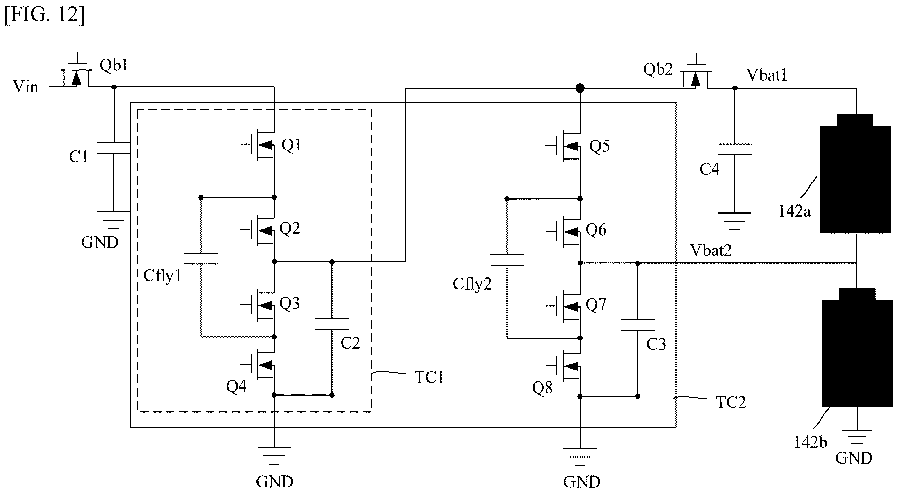

Specifically, with reference to FIG. 12, for example, the voltage conversion circuit TC1 uses an SC with a voltage conversion ratio of 4:2, and the voltage conversion circuit TC2 uses an SC with a voltage conversion ratio of 4:1. With reference to FIG. 12, a TC1 includes a switch circuit including switches Q1 to Q4 and a 4:2 SC including a flying capacitor Cfly1 and an output capacitor C2. A first end of Q1 is coupled to the power supply end Vin, a second end of Q1 is coupled to a first end of Q2, a second end of Q2 is coupled to a first end of Q3, a second end of the Q3 is coupled to a first end of Q4, and a second end of Q4 is coupled to the ground GND. A first end of the flying capacitor Cfly1 is coupled to the first end of Q2, a second end of Cfly1 is coupled to the first end of Q4, a first end of the output capacitor C2 is coupled to the first end of Q3, and a second end of C2 is coupled to the ground GND. The first end of the output capacitor C2 is coupled to an output end Vbat1 of the voltage conversion circuit TC1. The 4:2 SC may convert a voltage input by Vin into a voltage of Vbat1 at a fixed voltage conversion ratio, and charge the first battery 142a and the second battery 142b.

With reference to FIG. 12, a TC2 includes a switch circuit including switches Q1 to Q8 and a 4:1 SC including flying capacitors Cfly1 and Cfly2, an output capacitor C2, and an output capacitor C3. For a connection relationship between the switches Q1 to Q4, the flying capacitor Cfly1, and the output capacitor C2, refer to the descriptions of TC2 in FIG. 11. A first end of Q5 is coupled to a second end of Q2, a second end of Q5 is coupled to a first end of Q6, a second end of Q6 is coupled to a first end of Q7, a second end of Q7 is coupled to a first end of Q8, and a second end of Q8 is coupled to the ground GND. A first end of the flying capacitor Cfly2 is coupled to the first end of Q6, a second end of Cfly2 is coupled to a first end of Q8, a first end of the output capacitor C3 is coupled to the first end of Q7, and a second end of C3 is coupled to the ground GND. The first end of the output capacitor C3 is coupled to an output end Vbat2 of the voltage conversion circuit TC2. The 4:1 SC may convert a voltage input by Vin into a voltage of Vbat2 at a fixed voltage conversion ratio, and charge the second battery 142b.

In addition, the charging circuit may further include a switch Qb2 and a capacitor C4. A first end of the switch Qb2 is coupled to the first end of Q5, and a second end of the switch Qb2 is coupled to an output end Vbat1 of the voltage conversion circuit TC1. A first end of the capacitor C4 is coupled to the output end Vbat1 of the voltage conversion circuit TC1, and a second end of the capacitor C4 is coupled to the ground GND. In this case, a current output by the TC1 may be further regulated through the switch Qb2.

FIG. 12 further shows a fail-safe circuit 1431 coupled between the power supply end Vin and the first end of the switch Q1. Functions of the fail-safe circuit 1431 are similar to that in FIG. 11, and details are not described herein again.

To control the charging circuit shown in FIG. 12, an embodiment of this application further provides a control time sequence (an on/off state of a switch during time periods T1 and T2) of each switch. Refer to Table 2.

**Table 2**

| Switch | Time T1 | Time T2 | Remarks |
|---|---|---|---|
| Q1 | ON | OFF | Achieve a voltage conversion ratio of 4:1 |
| Q2 | OFF | ON | |
| Q3 | ON | OFF | |
| Q4 | OFF | ON | |
| Q5 | ON/OFF | OFF/ON | |
| Q6 | OFF/ON | ON/OFF | |
| Q7 | ON/OFF | OFF/ON | |
| Q8 | OFF/ON | ON/OFF | |
| Qb1 | ON | ON | Prevent a current from flowing back |
| Qb2 | PWM | PWM | Control a current by using a PWM signal |

With reference to Table 2, the switch circuit including the switches Q1 to Q4, the flying capacitor Cfly1, and the output capacitor C2 may form an SC with a voltage conversion ratio of 4:2, and the switch circuit including the switches Q4 to Q8, the flying capacitor Cfly2, and the output capacitor C3 may form another SC with a voltage conversion ratio of 4:2. Therefore, the TC1 is equivalent to an SC with a voltage conversion ratio of 4:2, the TC2 is equivalent to an SC with a voltage conversion ratio of 4:1 that cascades two SCs with a voltage conversion ratio of 4:2. A working principle of each SC with a voltage conversion ratio of 4:2 is similar to the working principle of TC2 in FIG. 11. Details are not described herein again.

In this way, the first control signal may carry control signals used for Q1 to Q4. Specifically, an equivalent impedance of a 4:2 SC may be adjusted by controlling switching frequencies of Q1 to Q4. For example, when the switching frequencies of Q1 to Q4 are reduced, a conversion efficiency of the SC is reduced, which is equivalent to that the equivalent impedance of the SC is improved, and the first current I1 is reduced. When the switching frequencies of Q1 to Q4 are increased, a conversion efficiency of the SC is increased, which is equivalent to that the equivalent impedance of the SC is reduced, and the first current I1 is increased. The second control signal may carry control signals used for Q5 to Q8. Specifically, an equivalent impedance of the 4:1 SC may be adjusted by controlling switching frequencies of Q5 to Q8. For example, when the switching frequencies of Q5 to Q8 are reduced, a conversion efficiency of the SC is reduced, which is equivalent to that the equivalent impedance of the SC is improved, and the second current I2 is reduced. When the switching frequencies of Q5 to Q8 are increased, a conversion efficiency of the SC is increased, which is equivalent to that the equivalent impedance of the SC is reduced, and the second current I2 is increased. As shown in Table 2, control signals of Q1 to Q4 may be the same as or complementary to control signals of Q5 to Q8.

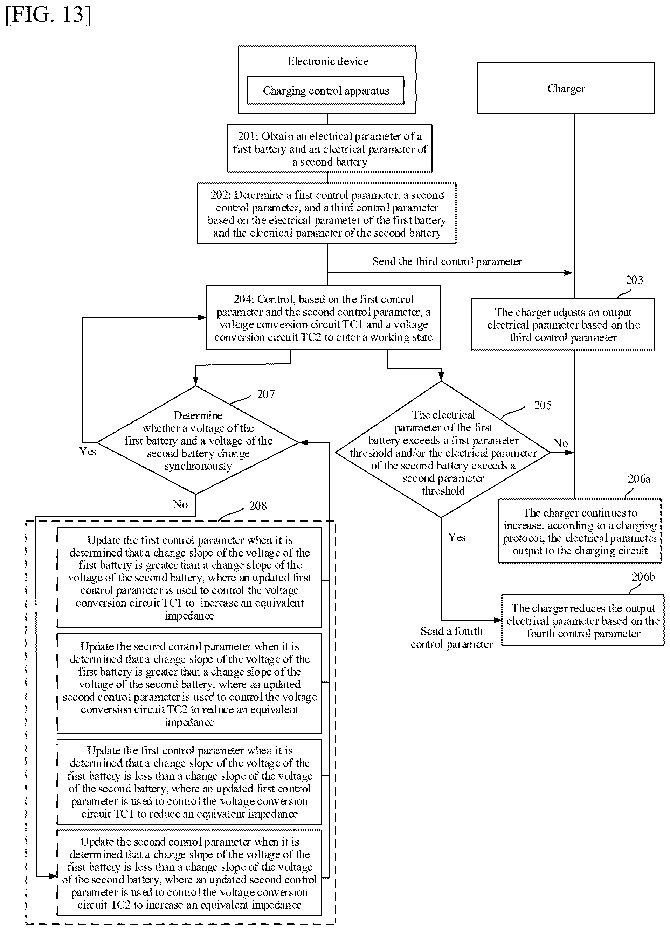

Based on the charging circuit shown in FIG. 7, an embodiment of this application further provides a charging control method. With reference to FIG. 13, the following steps are included.

201: A charging control apparatus obtains an electrical parameter of a first battery and an electrical parameter of a second battery.

For example, when a first battery 142a and a second battery 142b start to be charged, a processing circuit 401 of a charging control apparatus 400 first detects electrical parameters of the first battery 142a and the second battery 142b by using a connected sensor (for example, by using an AP or an MCU), to obtain the following electrical parameters of the first battery 142a and the second battery 142b: currents, voltages, states of charge, temperatures, and the like. It should be noted that, when the method is applied to the charging circuit shown in FIG. 8, FIG. 9A, or FIG. 9B, an electrical parameter of the third battery 142c further needs to be obtained.

202: The charging control apparatus 400 determines a first control parameter, a second control parameter, and a third control parameter based on the electrical parameter of the first battery and the electrical parameter of the second battery.

The third control parameter may be a control parameter for a charger. For example, the AP, the MCU, and the like may determine, based on the detected current electrical parameters of the first battery 142a and the second battery 142b, and preconfigured charging configuration parameters of the first battery 142a and the second battery 142b (for example, configuration parameters such as states of charge in a fully charged state, voltages, currents, current-limiting voltages, and current-limiting temperatures of the first battery 142a and the second battery 142b), an electrical parameter output by the charger in a charging start state. Then, the third control parameter is output to the charger, to control the electrical parameter output by the charger. It should be noted that, when the method is applied to the charging circuit shown in FIG. 8, FIG. 9A, or FIG. 9B, an electrical parameter and a charging configuration parameter of the third battery 142c further need to be referenced when the third control parameter is generated in step 202.

203: The charger adjusts an output electrical parameter based on the third control parameter.

For example, for the example shown in FIG. 10A, based on the third control parameter, a voltage provided by the charger to the power supply end Vin of the charging circuit 143 satisfies Vin=Vch+Vcl+Vx. For the example shown in FIG. 10C, based on the third control parameter, a voltage provided by the charger to the power supply end Vin of the charging circuit 143 satisfies Vin=(Vch+Vcl)*2+Vx, where Vch is a voltage of the first battery 142a, Vcl is a voltage of the second battery 142b, and Vx may be a small voltage, for example, Vx may be 100 mV. In this way, there may be a specific voltage difference between an input voltage of Vin and a sum of the voltages of the first battery 142a and the second battery 142b, to form a charging current, but the charging current is not excessively large. When the method is applied to the charging circuit in FIG. 8, Vcl may be a parallel voltage of the second battery 142b and the third battery 142b. When the method is applied to the charging circuit in FIG. 9A, Vcl may be a series voltage of the second battery 142b and the third battery 142c. When the method is applied to the charging circuit in FIG. 9B, if the voltage conversion circuit TC1 uses a voltage conversion ratio of 3:3, the voltage conversion circuit TC2 uses a voltage conversion ratio of 3:2, and the voltage conversion circuit TC3 uses a voltage conversion ratio of 3:1, based on the third control parameter, a voltage provided by the charger to the power supply end Vin of the charging circuit 143 satisfies Vin=Vch+Vcl+Vcl'+Vx, where Vch is a voltage of the first battery 142a, Vcl is a voltage of the second battery 142b, Vcl' is a voltage of the third battery 142c, and Vx may be a small voltage, for example, Vx may be 100 mV.

204: The charging control apparatus 400 controls, based on the first control parameter and the second control parameter, the voltage conversion circuit TC1 and the voltage conversion circuit TC2 to enter a working state.

Specifically, with reference to the foregoing example, the charging control apparatus 400 separately outputs, based on the electrical parameter of the first battery 142a and the electrical parameter of the second battery 142b, the first control parameter to the voltage conversion circuit TC1 and the second control parameter to the voltage conversion circuit TC2. It should be noted that, when the method is applied to the charging circuit shown in FIG. 8, FIG. 9A, and FIG. 9B, the electrical parameter of the third battery 142c further needs to be referenced when the first control parameter and the second control parameter are generated in step 202. In addition, when the method is applied to the charging circuit shown in FIG. 9B, a fifth control parameter of the voltage conversion circuit TC3 further needs to be generated based on the electrical parameter of the first battery 142a, the electrical parameter of the second battery 142b, and the electrical parameter of the third battery 142c.

205: The charging control apparatus 400 determines that the electrical parameter of the first battery exceeds a first parameter threshold and/or the electrical parameter of the second battery exceeds a second parameter threshold.

Specifically, the charging control apparatus 400 may continuously detect the electrical parameters of the first battery 142a and the second battery 142b with reference to the manner in step 201. Specifically, the charging control apparatus 400 may detect the electrical parameters such as Vch, Vcl, I1, and I3. Certainly, parameter thresholds may be separately set for Vch, Vcl, I1, and I3. If none of Vch, Vcl, I1, and I3 exceeds the parameter threshold, step 206a continues to be performed. When any one of the electrical parameters exceeds the parameter threshold, a fourth control parameter is output to the charger, to control the charger to perform step 206b.

206a: The charger continues to increase, according to a charging protocol, the electrical parameter output to the charging circuit.

For example, the charger may increase the output voltage by a specific step according to the currently executed charging protocol, and the charging control apparatus 400 periodically performs step 205 at intervals of a specific time period, for example, 100 ms, until an upper limit voltage specified in the charging protocol is reached.

206b: The charger controls, based on the fourth control parameter, the charger to reduce the output electrical parameter.

For example, the charger may reduce a voltage or a current output to the power supply end Vin. It should be noted that, when the method is applied to the charging circuit shown in FIG. 8, whether I4 exceeds a corresponding parameter threshold further needs to be determined in step 205. When the method is applied to the charging circuit shown in FIG. 9B, whether Vcl' and I5 exceed corresponding parameter thresholds further needs to be determined in step 205. The electrical parameter output by the charger is controlled in step 205 to step 206b, so that charging safety of the electronic device can be ensured, that an electrical parameter provided by the charging circuit to each battery in a charging process does not exceed a parameter threshold is ensured, and the battery is prevented from being directly damaged or a service life of the battery is not affected.

After step 204, the method further includes the following step.

207: The charging control apparatus 400 determines, based on the electrical parameter of the first battery and the electrical parameter of the second battery, whether a voltage of the first battery and a voltage of the second battery change synchronously.

If the voltage of the first battery and the voltage of the second battery change synchronously, the voltage conversion circuit TC1 and the voltage conversion circuit TC2 are respectively controlled based on the first control parameter and the second control parameter. If the voltage of the first battery and the voltage of the second battery do not change synchronously, step 208 is performed. It should be noted that, when the method is applied to FIG. 8, step 207 is specifically: determining, based on the electrical parameter of the first battery, the electrical parameter of the second battery, and the electrical parameter of the third battery, whether the voltage of the first battery and the parallel voltage of the second battery and the third battery change synchronously. When the method is applied to FIG. 9A, step 207 is specifically: determining, based on the electrical parameter of the first battery, the electrical parameter of the second battery, and the electrical parameter of the third battery, whether the voltage of the first battery and the series voltage of the second battery and the third battery change synchronously. When the method is applied to FIG. 9B, step 207 is specifically: determining, based on the electrical parameter of the first battery, the electrical parameter of the second battery, and the electrical parameter of the third battery, whether the voltage of the first battery, the voltage of the second battery, and the voltage of the third battery change synchronously.

208: The charging control apparatus 400 updates the first control parameter and/or the second control parameter.

Specifically, the first control parameter and/or the second control parameter may be updated in the following manner:
Manner 1: When it is determined that a change slope of the voltage of the first battery is greater than a change slope of the voltage of the second battery (that is, a ramp-up speed of Vch is faster than that of Vcl), the first control parameter is updated, where an updated first control parameter is used to control the voltage conversion circuit TC1 to increase the equivalent impedance. A manner of improving the equivalent impedance includes but is not limited to: for the charging circuits in FIG. 10A and FIG. 10C, the turn-on impedance of the 2:2 direct charging circuit may be increased, or the turn-on duty cycle of the 2:2 direct charging circuit may be reduced; and for the charging circuits in FIG. 10B and FIG. 10D, a switching frequency of the 4:2 SC may be adjusted to reduce a conversion efficiency.
Manner 2: When it is determined that a change slope of the voltage of the first battery is greater than a change slope of the voltage of the second battery (that is, a ramp-up speed of Vch is faster than that of Vcl), the second control parameter is updated, where an updated second control parameter is used to control the voltage conversion circuit TC2 to reduce the equivalent impedance. A manner of reducing the equivalent impedance includes but is not limited to: for the charging circuits in FIG. 10A and FIG. 10B, switching frequencies of the 2:1 SC and the 4:1 SC may be adjusted to increase a conversion efficiency; and for the charging circuits in FIG. 10C and FIG. 10D, the BUCK may be controlled to increase the output voltage or current.
Manner 3: When it is determined that a change slope of the voltage of the first battery is less than a change slope of the voltage of the second battery (that is, a ramp-up speed of Vch is slower than that of Vcl), the first control parameter is updated, where an updated first control parameter is used to control the voltage conversion circuit TC1 to reduce the equivalent impedance. A manner of reducing the equivalent impedance includes but is not limited to: for the charging circuits in FIG. 10A and FIG. 10C, the turn-on impedance of the 2:2 direct charging circuit may be reduced, or the turn-on duty cycle of the 2:2 direct charging circuit may be increased; and for the charging circuits in FIG. 10B and FIG. 10D, a switching frequency of the 4:2 SC may be adjusted to increase a conversion efficiency.
Manner 4: When it is determined that a change slope of the voltage of the first battery is less than a change slope of the voltage of the second battery (that is, a ramp-up speed of Vch is slower than that of Vcl), the second control parameter is updated, where an updated second control parameter is used to control the voltage conversion circuit TC2 to increase the equivalent impedance. A manner of improving the equivalent impedance includes but is not limited to: for the charging circuits in FIG. 10A and FIG. 10B, switching frequencies of the 2:1 SC and the 4:1 SC may be adjusted to reduce a conversion efficiency; and for the charging circuits in FIG. 10C and FIG. 10D, the BUCK may be controlled to reduce the output voltage or current.

In addition, step 207 continues to be performed after the first control parameter and/or the second control parameter are/is updated.

It should be noted that, when the method is applied to FIG. 8, in Manner 1 to Manner 4, specifically, the first control parameter or the second control parameter is updated by determining a relationship between the change slope of the voltage of the first battery and the change slope of the parallel voltage of the second battery and a third battery. When the method is applied to FIG. 9A, in Manner 1 to Manner 4, specifically, the first control parameter or the second control parameter is updated by determining a relationship between the change slope of the voltage of the first battery and the change slope of the series voltage of the second battery and a third battery. When the method is applied to FIG. 9B, in Manner 1 to Manner 4, are specifically, the first control parameter, the second control parameter, or the fifth control parameter is updated by determining the change slope of the voltage of the first battery, the change slope of the voltage of the second battery, and the change slope of the series voltage of the third battery.

It may be understood that, to implement the foregoing functions, the charging control apparatus includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. In embodiments of this application, the charging control apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, when the functional modules are obtained through division in an integrated manner, FIG. 7 to FIG. 9B are diagrams of a structure of a charging control apparatus. The charging control apparatus may be an electronic device, a chip or a system on chip in the electronic device, another combined device or component that can implement a function of the charging control apparatus, or the like. The charging control apparatus may be configured to perform the function of the charging control apparatus in the foregoing embodiments.

In a possible implementation, the charging control apparatus 400 shown in FIG. 7 to FIG. 9B includes a processing circuit 401 and a detection circuit 402. The detection circuit 402 is configured to perform steps 101 and 201. The processing circuit 401 is configured to perform steps 102, 103, 202, 204, 205, 207, and 208.

All related content of the operations in the foregoing method embodiments may be cited in function descriptions of the corresponding function modules. Details are not described herein again.

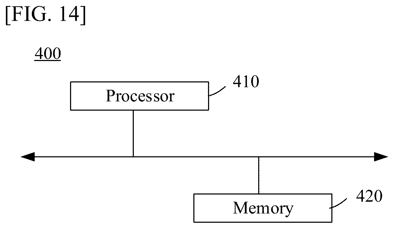

In this embodiment, the electronic device may be presented in a form of functional modules obtained through division in an integrated manner. The "module" herein may be a specific ASIC, a circuit, a processor executing one or more software or firmware programs, a memory, an integrated logic circuit, and/or another device that can provide the foregoing function. In a simple embodiment, with reference to FIG. 14, the charging control apparatus 400 may include a processor 410 and a memory 420 coupled to the processor 410. The memory 420 stores program code, and the processor 410 is configured to execute the program code in the memory to perform the foregoing charging control method.

For example, a function/implementation process of the processing circuit 401 and the detection circuit 402 in FIG. 7 to FIG. 9B may be implemented by the processor 410 by invoking computer-executable instructions stored in the memory 420. In some examples, when the method is applied to the electronic device 100, the processor 410 may be the processor 110 in FIG. 2.

The charging control apparatus provided in this embodiment may perform the foregoing charging control method. Therefore, for technical effects that can be achieved by the charging control apparatus, refer to the foregoing method embodiments. Details are not described herein again. Optionally, an embodiment of this application further provides a charging control apparatus (for example, the charging control apparatus may be a chip or a chip system). When the charging control apparatus is the chip system, the charging control apparatus may include a chip, or may include a chip and another discrete device. This is not specifically limited in this embodiment of this application.

Optionally, an embodiment of this application further provides a chip, including a substrate and a charging circuit manufactured on the substrate.

All or some of the foregoing embodiments may be implemented through software, hardware, firmware, or any combination thereof. When a software program is used to implement the embodiments, the embodiments may be implemented entirely or partially in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to the embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging circuit, used in an electronic device, configured to charge a first battery and a second battery of the electronic device, and comprising a first voltage conversion circuit and a second voltage conversion circuit, wherein an input end of the first voltage conversion circuit and an input end of the second voltage conversion circuit are coupled to a power supply end;
an output end of the first voltage conversion circuit is configured to be coupled to a positive electrode of the first battery, a negative electrode of the first battery is coupled to a positive electrode of the second battery, and a negative electrode of the second battery is coupled to a ground; and
an output end of the second voltage conversion circuit is configured to be coupled to the positive electrode of the second battery, wherein
a first voltage conversion ratio of the first voltage conversion circuit is different from a second voltage conversion ratio of the second voltage conversion circuit, the first voltage conversion circuit is configured to output a first current to the first battery and the second battery in a working state, the second voltage conversion circuit is configured to output a second current to the second battery in a working state, and the working state of the first voltage conversion circuit and the working state of the second voltage conversion circuit overlap in terms of time.

2. The charging circuit according to claim 1, wherein the first voltage conversion ratio is less than the second voltage conversion ratio.

3. The charging circuit according to claim 1 or 2, wherein the electronic device further comprises a third battery, wherein the third battery is connected in parallel to the second battery, or the third battery is connected in series between the negative electrode of the second battery and the ground.

4. The charging circuit according to any one of claims 1 to 3, wherein the first voltage conversion circuit comprises any one of the following: a direct charging circuit, and a switched capacitor circuit.

5. The charging circuit according to any one of claims 1 to 4, wherein the second voltage conversion circuit comprises any one of the following: a switched capacitor circuit, and a buck circuit.

6. The charging circuit according to any one of claims 1 to 5, wherein
the first voltage conversion ratio comprises 2:2, and the second voltage conversion ratio comprises 2:1; or
the first voltage conversion ratio comprises 4:2, and the second voltage conversion ratio comprises 4:1.

7. A charging control method, applied to an electronic device, wherein the electronic device comprises a charging circuit, a first battery, and a second battery; the charging circuit comprises a first voltage conversion circuit and a second voltage conversion circuit; an input end of the first voltage conversion circuit and an input end of the second voltage conversion circuit are coupled to a power supply end; an output end of the first voltage conversion circuit is configured to be coupled to a positive electrode of the first battery, a negative electrode of the first battery is coupled to a positive electrode of the second battery, and a negative electrode of the second battery is coupled to a ground; and an output end of the second voltage conversion circuit is configured to be coupled to the positive electrode of the second battery, wherein
the charging control method comprises:
obtaining an electrical parameter of the first battery and an electrical parameter of the second battery;
outputting a first control parameter to the first voltage conversion circuit based on the electrical parameter of the first battery and the electrical parameter of the second battery;
outputting a second control parameter to the second voltage conversion circuit based on the electrical parameter of the first battery and the electrical parameter of the second battery;
outputting, by the first voltage conversion circuit, a first current to the first battery and the second battery; and
outputting, by the second voltage conversion circuit, a second current to the second battery, wherein
a first voltage conversion ratio of the first voltage conversion circuit is different from a second voltage conversion ratio of the second voltage conversion circuit, and a working state of the first voltage conversion circuit and a working state of the second voltage conversion circuit overlap in terms of time.

8. The charging control method according to claim 7, further comprising:
when it is determined, based on the electrical parameter of the first battery and the electrical parameter of the second battery, that a voltage of the first battery and a voltage of the second battery do not change synchronously, updating the first control parameter and/or the second control parameter.

9. The charging control method according to claim 8, wherein updating the first control parameter specifically comprises:
updating the first control parameter when it is determined that a change slope of the voltage of the first battery is greater than a change slope of the voltage of the second battery, wherein an updated first control parameter is used to control the first voltage conversion circuit to increase an equivalent impedance.

10. The charging control method according to claim 8, wherein updating the second control parameter specifically comprises:
updating the second control parameter when it is determined that a change slope of the voltage of the first battery is greater than a change slope of the voltage of the second battery, wherein an updated second control parameter is used to control the second voltage conversion circuit to reduce an equivalent impedance.

11. The charging control method according to claim 8, wherein updating the first control parameter specifically comprises:
updating the first control parameter when it is determined that a change slope of the voltage of the first battery is less than a change slope of the voltage of the second battery, wherein an updated first control parameter is used to control the first voltage conversion circuit to reduce an equivalent impedance.

12. The charging control method according to claim 8, wherein updating the first control parameter specifically comprises:
updating the second control parameter when it is determined that a change slope of the voltage of the first battery is less than a change slope of the voltage of the second battery, wherein an updated second control parameter is used to control the second voltage conversion circuit to increase an equivalent impedance.

13. A chip, comprising a substrate and the charging circuit according to any one of claims 1 to 6 that is fabricated on the substrate.

14. A charging control apparatus, used in an electronic device, wherein the electronic device is configured to connect to a charger to form a charging system, the charger is configured to charge a battery of the electronic device, and the charging control apparatus comprises a processor and a memory coupled to the processor, wherein
the memory stores program code, and the processor is configured to execute the program code in the memory, to perform the charging control method according to any one of claims 7 to 12.

15. An electronic device, comprising the charging circuit according to any one of claims 1 to 6, a first battery, and a second battery, wherein the charging circuit is connected to the first battery and the second battery.

16. An electronic device, comprising the charging control apparatus according to claim 14, a first battery, and a second battery, wherein the charging control apparatus is connected to the first battery and the second battery.
